# EUROPEAN PATENT SPECIFICATION

(11) **EP 3 155 306 B1**
(45) Date of publication and mention of the grant of the patent: **02.09.2020**
(21) Application number: 15806286.9
(22) Date of filing: 12.06.2015
(51) Int. Cl.: F16L 27/08, F16L 21/08, F16L 37/248, F16L 25/08

(54) **ADJUSTABLE CONNECTION FITTING**
ANPASSBARES VERBINDUNGSTEIL
RACCORD DE CONNEXION RÉGLABLE

(30) Priority: 13.06.2014 AU 2014902259
(43) Date of publication of application: 19.04.2017
(73) Proprietor: Reliance Worldwide Corporation (Aust.) Pty. Ltd., Melbourne, Victoria 3000 (AU)
(72) Inventor: FORERESTAL, David, Peter, Clayfield, Queensland 4011 (AU)
(74) Representative: Boult Wade Tennant LLP
(86) International application number: PCT/AU2015/050322
(87) International publication number: WO 2015/188232

(56) References cited:
- EP-A2- 1 724 509
- EP-B1- 1 309 813
- WO-A2-2008/152643
- WO-A2-2008/152643
- GB-A- 809 085
- GB-A- 2 093 547
- GB-A- 191 410 530
- US-A- 3 345 087
- US-A- 4 124 231
- US-A- 5 004 013
- US-A1- 2011 148 101
- US-B1- 6 572 154

## Description

### FIELD OF THE INVENTION

This invention relates to connection fittings which allow for various plumbing pieces to be arranged into a number of orientations, particularly in relation to a connection fitting which allows valves or pipes to be arranged in a preferred orientation to the manifold of a pump and to a mechanism which enables this.

### BACKGROUND OF THE INVENTION

Water pumps such as for recirculating water systems are generally included at an angle to the vertical to keep bearings covered by water. This means that the manifolds of such pumps are also angled to the vertical. As a result, fittings attached to such manifolds also are at an angle to the vertical. This presents problems where it is required or preferred that the fittings be parallel to a vertical surface such as a wall. Incorporation of angles into fittings requires substantial modification or additional components, which increases cost of manufacture.

US2011/148101 describes a pipe coupling having a housing with a receiving recess for a pipe. The housing having a through hole extending from a first aperture in an external surface of the housing through to a second aperture in the inner wall of the receiving recess. A fixing element is arranged to slidingly mate with the through hole in the housing to give a mated configuration, and when in the mated configuration, an engagement part of the fixing element is adapted to project through the second aperture to lockingly engage with the outer surface of the pipe. The through hole is also provided with a locking means adapted to be configured in an open configuration, in which the fixing element can be slidingly mated with or removed from the through hole through the first aperture, and a locked configuration, in which the locking means holds the fixing element in the mated configuration in the through hole. The pipe coupling provides a fluid-tight connection using relatively low-tolerance, easily manufactured parts and suitable for rapid deployment in hazardous environments.

US4124231 describes a pipe connector having a pin initially stabbed into a box. The pin and box then being axially loaded together at confronting transverse surfaces while the pin and box are pressurized to expand the box and compress the pin, so that when the pressure is relieved a pressure energized shrink fit is provided and the connector is rendered rigid to enhance tensile, compressive and bending strength and provide a fluid tight joint useful in making up lengths of pipe such as piles and pipelines. Lock means hold the connector against axial separation to maintain the pin under axial compression and maintain the box under axial tension, including circumferentially spaced locking elements projecting radially from one of said pin and box into a locking recess of the other of said pin and box.

EP1309813 discloses a fitting for connecting two components. The fitting may be explosion proof for use in harzardous environments. The fitting may swivel allowing fast and easy connection to fixed components, thus minimizing the time required for installation and periodic maintenance, while maintaining the integrity of the explosion proof fitting. In this way, components - such as electrical conduits containing conductors or wires - can be installed and maintained without the use of damming material. Also described is a method of installing an explosion proof fitting for use in hazardous environments. A fitting (10 and 20) for connecting two components (70 and 80) is provided, wherein the fitting includes an adapter (10) and a bushing (20). The adapter includes a thread end (12) and a female collar (14). The bushing includes a smooth male end (24), adapted to engage the interior of the adapter, a threaded end (22) and a stop shoulder (27). The female collar of the adapter is provided with screws (50) to engage and secure the adapter to the bushing.

### SUMMARY OF THE INVENTION

An approach which enables the aforementioned problems to be overcome has been developed. Disclosed herein is a connection fitting for use in conjunction with a plurality of plumbing pieces, being pipes, tubes, valves, manifolds or the like, so that a pair of such plumbing pieces when connected by the connection fitting can be positioned at one of a plurality of orientations with respect to each other, said orientations being selectable.

Also disclosed herein is a mechanism for enabling the selective orientation of a pair of plumbing views or a plumbing piece and a pump manifold.

### DESCRIPTION OF THE INVENTION

According to an aspect of the present invention there is provided a connection fitting according to claim 1.

Also disclosed herein is a mechanism for orientating a plumbing piece with respect to a second plumbing piece or a pump manifold in one of a plurality of predetermined orientations, said mechanism including a connection fitting, said connection fitting have a tubular body provided at a first end with means for connection to a first plumbing piece, the second end of the tubular body being inserted into, or received within, the bore of a second plumbing piece, said tubular body also being provided with a circumferential channel with a plurality of recesses opening there into, said plurality of recesses being spaced at regular intervals around said circumferential channel, said circumferential channel and/or recesses receiving retaining means projecting inwardly of the bore of the second plumbing piece, said retaining means being spaced around the circumference of the bore of the second plumbing piece at intervals corresponding to the spacing of the plurality of recesses, the bore of the second plumbing piece containing biasing means opposing or resisting insertion of the connection fitting into the bore of the second plumbing piece, at least one of the retaining means being adjustable so as to allow rotation of the connection fitting around the longitudinal axis of its tubular body so as to permit one of a number of predetermined orientations of the connection fitting with respect to the second plumbing piece to be achieved.

Preferably, the means for connection at the said first end of the tubular body of the connection fitting are oriented at an angle to the longitudinal axis of the tubular body. Alternatively, the tubular body may include a bend, subject to the requirement that the geometry of the bend does not unduly affect fluid flow through the connection fitting.

The means for connection at the said first end of the tubular body of the connection fitting may take the form of an annular plate which can abut an outlet or inlet manifold of a pump and which can be secured thereto by a nut interacting with said outlet or inlet manifold.

The retaining means provided on the second plumbing piece may take the form of a plurality of projections extending inwardly of the bore of the second plumbing piece. Preferably at least one of the plurality of projections is formed by the shaft of a screw. Preferably at least one of the screws is a screw having a security head. Preferably the shaft of said screw with a security head protrudes into the circumferential channel or recess on the connection fitting but not so far as to prevent relative movement of the connection fitting with respect to the second plumbing piece. Preferably when the connection fitting is connected to a second plumbing piece being a valve said screw with a security head holds the valve internals in place and does not need to be adjusted except for valve disassembly. Preferably the others of the plurality of projections are adjustable and may be formed by the shafts of screws extending into the bore of the second plumbing piece, and into the circumferential channel and/or recesses of the tubular body, and more preferably those screws may be screwed in or out to increase or decrease their interaction with the circumferential channel and/or recesses, to respectively prevent or allow the connection fitting to be moved with respect to the second plumbing piece.

Preferably the biasing means is a compression spring retained within the bore of the second plumbing piece. Preferably the compression spring is seated on a shoulder within the bore of the tubular body of the connection fitting.

Preferably to alter the orientation of the connection fitting with respect to the second plumbing piece, the at least one of the plurality of adjustable projections are adjusted to decrease their interaction with the circumferential channel and/or recesses on the tubular body of the connection fitting. Preferably the decrease of interaction between the adjustable projections and the circumferential channel and/or recesses results from screwing out screws, the shafts of which form the plurality of adjustable projections. The connection fitting is then pushed further into the bore of the second plumbing piece, against the biasing means. This moves the plurality of recesses inwardly with respect to the opening of the bore of the second plumbing piece and releases them from interaction with the plurality of projections. The connection fitting is then rotated around the axis of its bore and that of the second plumbing piece until a desired new orientation of recesses and projections is achieved. The connection fitting is then allowed to move outwardly with respect to the opening of the bore of the second plumbing piece under the influence of the biasing means. The projections then engage with the recesses and the adjustable projections can then be adjusted to lock the connection fitting in the new orientation. Preferably, this is achieved by screwing in screws, the shafts of which form the plurality of adjustable projections.

### DESCRIPTION OF PREFERRED EMBODIMENT

In order that the present invention may be more clearly understood a preferred embodiment is described hereinafter with reference to the accompanying drawings in which:

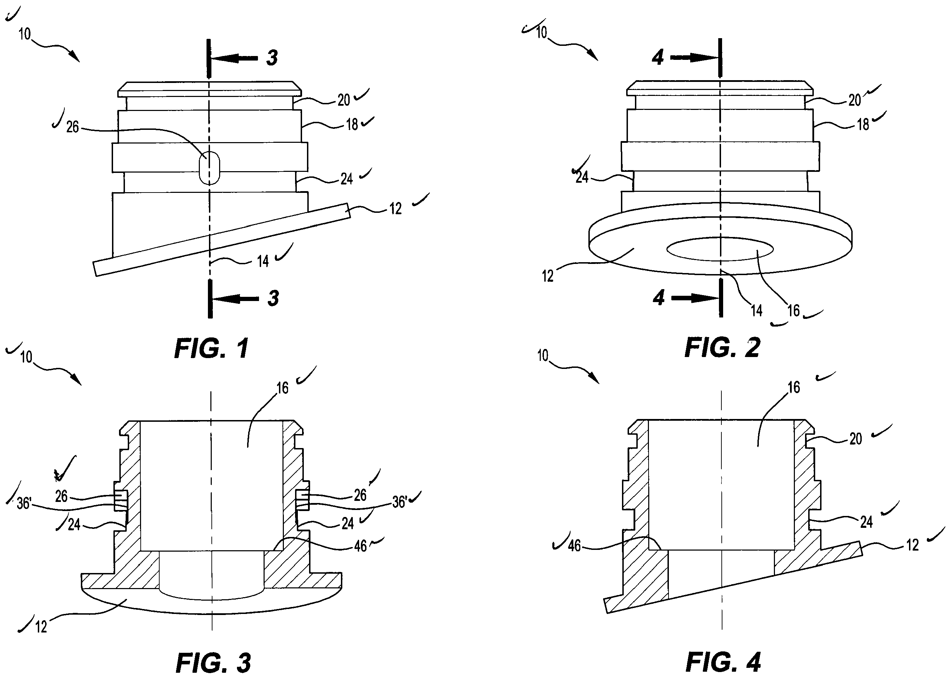

Figure 1 is a one side view of a connection fitting according to a preferred embodiment of the present invention;
Figure 2 is another side view of the preferred embodiment of Figure 1;
Figure 3 is a sectional view along 3-3 of Figure 1;
Figure 4 is a sectional view along 4-4 of Figure 2;

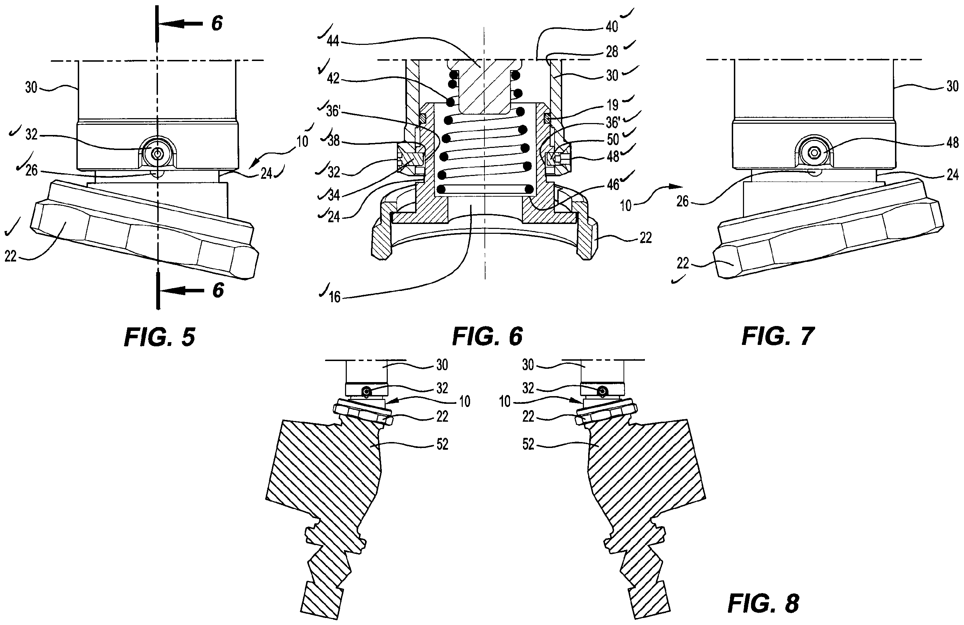

Figure 5 is a side view of the preferred embodiment of Figure 1 in association with a tubular portion of a valve in a first orientation;
Figure 6 is a sectional view along 6-6 of Figure 5; and
Figure 7 is a side view of the preferred embodiment of Figure 1 in association with the tubular portion of the valve in a second orientation;
Figure 8 is a pair of schematic views showing a pump (in outline only) attached to the preferred embodiment of Figure 1, with the preferred embodiment being in two orientations;

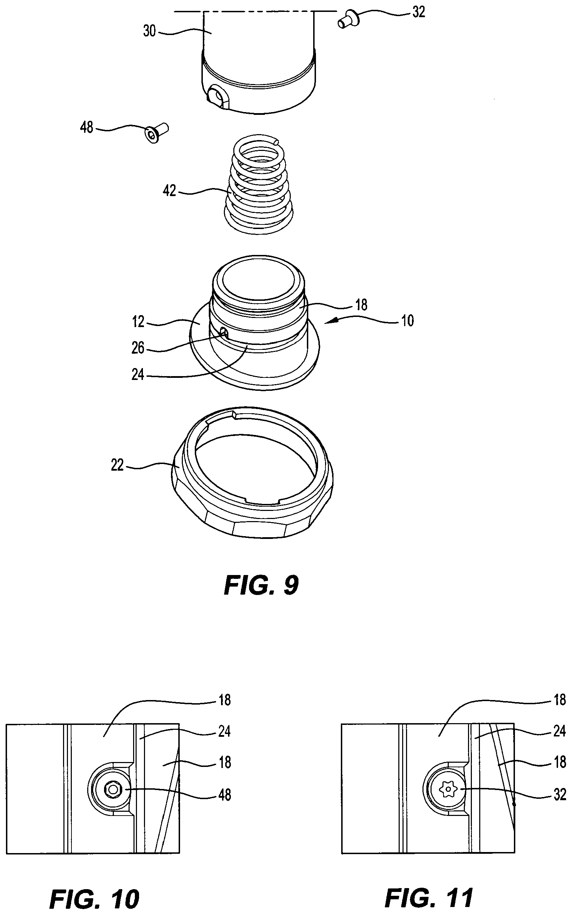

Figure 9 is a partially exploded view of the preferred embodiment and the tubular portion of a valve;
Figure 10 is a close up view of a locking screw for use with the preferred embodiment and tubular portion of a valve;
Figure 11 is a close up view of a screw with a security head for use with the preferred embodiment and tubular portion of a valve;

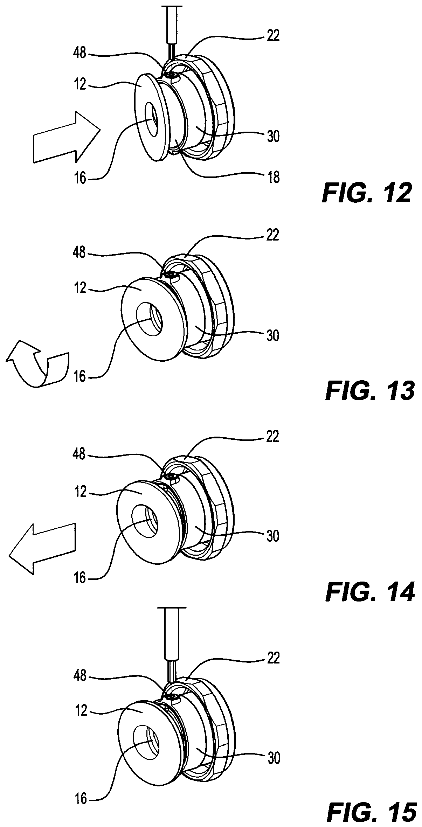

Figure 12 is a perspective view of the initial step in altering the orientation of the preferred embodiment with respect to a valve;
Figure 13 is a perspective view of the rotational step in altering the orientation of the preferred embodiment with respect to a valve;
Figure 14 is a perspective view of the release step in altering the orientation of the preferred embodiment with respect to a valve;
Figure 15 is a perspective view of the final (locking) step in altering the orientation of the preferred embodiment with respect to a valve.

The numeral 10 designates generally a connection fitting according to a preferred embodiment of the invention. The preferred embodiment is adopted for connecting a plumbing piece such as, in the present instance, a valve to a pump. in the drawings not all integers of the valve are shown. Connection fitting 10 is provided at its proximal end with a pump connection face 12, said pump connection face 12 being oriented at angle to the longitudinal axis 14 of the bore 16 of the tubular body 18 forming the major part of the connection fitting 10. A circumferential groove 20 is provided adjacent the distal end of tubular body 18 to receive an O-ring 19 to provide sealing between the connection fitting and the internal surface 28 of the bore 40 of a valve 30. In use pump connection face 12 of the connection fitting 10 is coupled to a pump inlet or outlet by means of a pump connection nut 22.

A circumferential channel 24 extends round the outside of the connection fitting and a plurality of recesses 26 extends distally, i.e., in the direction toward the valve, therefrom. The plurality of recesses 26, here two in number, are spaced evenly around the circumference of the outside of the tubular body 18.

A screw 32 with a security head extends inwardly of the longitudinal axis of the bore of the valve and the end 38 of its shaft 34 is received within a recess 26 connected to circumferential channel 24. The screw shaft 34 is not inserted so far into the circumferential channel 24 or recess 26 so as to have end 38 thereof engage either the inner surface 36 of the circumferential channel 24 or the inner surface 36' of the recess 26. However, the screw shaft 34 does extend sufficiently far into the circumferential channel 24 or recess 26 as to prevent ejection (by the biasing means) or removal of the connection fitting 10 from the bore 40 of the valve 30. This ensures that the internal components in the valve 30 are retained within bore 40.

A biasing means within the bore of the valve 30 is provided by compression spring 42 which here is positioned between the proximal end of a thermostatic element 44 and a shoulder 46 within the bore 16 of connection fitting 10.

Locking screw 48 is provided with a conventional head such as a Phillips head. The shaft 50 of locking screw 48 extends into the circumferential channel 24 and/or recess 26. In a locked orientation (not shown here) the end of shaft 50 engages the inner surface 36' of a recess 26 and prevents movement of the connection fitting 10 with respect to the valve 30. Locking screw 48 can be loosened by unscrewing.

To alter the orientation of the pump connection face the locking screw 48 is loosened. This results in the end of the shaft 50 no longer engaging the inner surface 36' of recess 26. The connection fitting 10 is pushed into bore 40 of the valve 30 or manifold against the face of the compression spring 42. The shafts 34 and 50 of the screws then move out of the recesses 26 and into the space defined by circumferential channel 24. In such a situation the connection fitting 10 can be rotated about its longitudinal axis 14 with the ends of screw shafts 38 and 50 being able to be moved along the circumferential channel 24. When the connection fitting 10 has been rotated through 180° the connection fitting 10 can be released and the compression spring 42 will force it outwardly of the bore 40 of the valve 30. As a result the shafts of the screws can enter the recesses, albeit with the connection fitting 10 and pipe connection face 12 in a new orientation with respect to the valve 30. Locking screw 48 can then be screwed in to engage inner surface 36' of recess 26 and lock the connection fitting in place.

Various modifications and alterations to this invention will become apparent to those skilled in the art without departing from the scope of this invention. It should be understood that this invention is not intended to be unduly limited by the illustrative embodiments and examples set forth herein and that such examples and embodiments are presented by way of example only with the scope of the invention intended to be limited only by the claims set forth herein as follows.

Throughout this specification and the claims which follow, unless the context requires otherwise, the word "comprise", and variations such as "comprises" or "comprising", will be understood to imply the inclusion of a stated integer or step or group of integers or steps but not the exclusion of any other integer or step or group of integers or steps.

The reference in this specification to any prior publication (or information derived from it), or to any matter which is known, is not, and should not be taken as an acknowledgment or admission or any form of suggestion that that prior publication (or information derived from it) or known matter forms part of the common general knowledge in the field of endeavour to which this specification relates.

## Claims

1. A connection fitting (10) for use in conjunction with a plurality of plumbing pieces, being pipes, tubes, valves, manifolds or the like, the connection fitting (10) including:
a tubular body (18) having:
a first end being provided with means for connection to a first plumbing piece; and
a second end being insertable into or receivable within a bore of a second plumbing piece,
wherein the tubular body (18) has a circumferential channel (24) and a plurality of recesses (26) opening into the circumferential channel (24) and spaced at regular intervals around the circumferential channel (24), the circumferential channel (24) and the recesses (26) being capable of interacting with retaining means so that engagement between the retaining means and plurality of recesses (26) orients the connection fitting (10) in place in one of a number of predetermined orientations.

2. The connection fitting (10) as claimed in claim 1, wherein the means for connection to the first plumbing piece at the first end of the tubular body (18) are oriented at an angle to the longitudinal axis of the tubular body (18).

3. The connection fitting (10) as claimed in claim 1 or 2, wherein the means for connection at the first end of the tubular body (18) is an annular plate which can abut an outlet or inlet manifold of a pump and which can be secured thereto by a nut interacting with the outlet or inlet manifold.

4. The connection fitting (10) as claimed in any one of claims 1 to 3, wherein a circumferential groove (20) is provided adjacent a distal end of the tubular body (18) to receive an O-Ring (19) to provide sealing between the connection fitting (10) and an internal surface (28) of a bore (40) of a valve (30).

5. The connection fitting (10) as claimed in any one of claims 1 to 4, wherein a shoulder (46) is formed within a bore (40) of the tubular body (18) of the connection fitting (10).

6. A plumbing mechanism including:
a connection fitting (10) as defined in any one of claims 1 to 5;
the second plumbing piece; and
the retaining means.

7. The plumbing mechanism as claimed in claim 6, wherein biasing means (42) opposes insertion of the connection fitting (10) into the second plumbing piece.

8. The plumbing mechanism as claimed in claim 7, wherein the biasing means (42) assists with returning at least one of the plurality of recesses (26) to engage with the retaining means in order to lock the connection fitting (10) in place.

9. The plumbing mechanism as claimed in claim 7 or 8, wherein the biasing means includes a compression spring (42) retained within the bore of the second plumbing piece; and wherein optionally the compression spring (42) is seated on the shoulder within the bore (16) of the tubular body (10).

10. The plumbing mechanism as claimed in claim any one of claims 6 to 9, wherein the retaining means are provided on the second plumbing piece and comprise a plurality of projections.

11. The plumbing mechanism as claimed in claim 10, wherein at least some of the plurality of projections are adjustable and are formed by the shafts of screws (32, 48) extending into the bore of the second plumbing piece, and into the circumferential channel (24) and/or recesses (26) of the tubular body (10),

12. The plumbing mechanism as claimed in claim 11, wherein the screws (32, 48) are screwed in or out to increase or decrease the interaction of the shafts of the screws (32, 48) with the circumferential channel (24) and/or recesses (26), to respectively prevent or allow the connection fitting (10) to be moved with respect to the plumbing piece.

13. The plumbing mechanism as claimed in any one of claims 6 to 12, wherein the second plumbing piece is a valve.

14. The plumbing mechanism as claimed in any one of claims 6 to 13, further including the first plumbing piece being a pipe, tube, or manifold.

## Patentansprüche

1. Verbindungsstück (10) zur Verwendung in Verbindung mit einer Mehrzahl von Installationsteilen, welche Rohre, Schläuche, Ventile, Verteiler oder dergleichen sind, wobei das Verbindungsstück (10) umfasst:
einen schlauchförmigen Körper (18), welcher aufweist:
ein erstes Ende, welches mit Mitteln zur Verbindung mit einem ersten Installationsteil bereitgestellt ist; und
ein zweites Ende, welches in eine Bohrung eines zweiten Installationsteils einsetzbar ist oder innerhalb davon aufnehmbar ist,
wobei der schlauchförmige Körper (18) einen umlaufenden Kanal (24) und eine Mehrzahl von Ausnehmungen (26) aufweist, welche in dem umlaufenden Kanal (24) münden und in regelmäßigen Abständen um den umlaufenden Kanal (24) beabstandet sind, wobei der umlaufende Kanal (24) und die Ausnehmungen (26) dazu in der Lage sind, derart mit Haltemitteln zusammenzuwirken, dass ein Eingriff zwischen den Haltemitteln und der Mehrzahl von Ausnehmungen (26) das Verbindungsstück (10) in einer aus einer Anzahl vorbestimmter Ausrichtungen an Ort und Stelle ausrichtet.

2. Verbindungsstück (10) nach Anspruch 1, wobei die Mittel zur Verbindung mit dem ersten Installationsteil an dem ersten Ende des schlauchförmigen Körpers (18) in einem Winkel zu der longitudinalen Achse des schlauchförmigen Körpers (18) ausgerichtet sind.

3. Verbindungsstück (10) nach Anspruch 1 oder 2, wobei das Mittel zur Verbindung an dem ersten Ende des schlauchförmigen Körpers (18) eine ringförmige Platte ist, welche an einem Auslass- oder Einlassverteiler einer Pumpe anliegen kann und welche durch eine mit dem Auslass- oder Einlassverteiler zusammenwirkende Mutter daran gesichert sein kann.

4. Verbindungsstück (10) nach einem der Ansprüche 1 bis 3, wobei benachbart zu einem distalen Ende des schlauchförmigen Körpers (18) eine umlaufende Nut (20) zum Aufnehmen eines O-Rings (19) bereitgestellt ist, um eine Dichtung zwischen dem Verbindungsstück (10) und einer Innenfläche (28) einer Bohrung (40) eines Ventils (30) bereitzustellen.

5. Verbindungsstück (10) nach einem der Ansprüche 1 bis 4, wobei innerhalb einer Bohrung (40) des schlauchförmigen Körpers (18) des Verbindungsstücks (10) eine Schulter (46) gebildet ist.

6. Installationsmechanismus, umfassend:
ein Verbindungsstück (10) nach einem der Ansprüche 1 bis 5;
das zweite Installationsteil; und
die Haltemittel.

7. Installationsmechanismus nach Anspruch 6, wobei ein Vorspannmittel (42) einem Einsetzen des Verbindungsstücks (10) in das zweite Installationsteil entgegenwirkt.

8. Installationsmechanismus nach Anspruch 7, wobei das Vorspannmittel (42) ein Zurückführen wenigstens einer der Mehrzahl von Ausnehmungen (26) unterstützt, um mit den Haltemitteln in Eingriff zu treten, um das Verbindungsstück (10) an Ort und Stelle zu verriegeln.

9. Installationsmechanismus nach Anspruch 7 oder 8, wobei das Vorspannmittel eine Druckfeder (42) umfasst, welche innerhalb der Bohrung des zweiten Installationsteils gehalten ist;
und wobei optional die Druckfeder (42) an der Schulter innerhalb der Bohrung (16) des schlauchförmigen Körpers (10) aufgenommen ist.

10. Installationsmechanismus nach einem der Ansprüche 6 bis 9, wobei die Haltemittel an dem zweiten Installationsteil bereitgestellt sind und eine Mehrzahl von Vorsprüngen umfassen.

11. Installationsmechanismus nach Anspruch 10, wobei wenigstens einige der Mehrzahl von Vorsprüngen einstellbar sind und durch die Schäfte von Schrauben (32, 48) gebildet sind, welche sich in die Bohrung des zweiten Installationsteils und in den umlaufenden Kanal (24) und/oder die Ausnehmungen (26) des schlauchförmigen Körpers (10) erstrecken.

12. Installationsmechanismus nach Anspruch 11, wobei die Schrauben (32, 48) ein- oder herausgeschraubt werden, um das Zusammenwirken der Schäfte der Schrauben (32, 48) mit dem umlaufenden Kanal (24) und/oder den Ausnehmungen (26) zu verstärken oder abzuschwächen, um zu verhindern bzw. zu ermöglichen, dass sich das Verbindungsstück (10) in Bezug auf das Installationsteil bewegt.

13. Installationsmechanismus nach einem der Ansprüche 6 bis 12, wobei das zweite Installationsteil ein Ventil ist.

14. Installationsmechanismus nach einem der Ansprüche 6 bis 13, ferner umfassend das erste Installationsteil, welches ein Rohr, ein Schlauch oder ein Verteiler ist.

## Revendications

1. Raccord de connexion (10) à utiliser conjointement avec une pluralité de pièces de plomberie, qui sont des tuyaux, des tubes, des vannes, des collecteurs ou analogues, le raccord de connexion (10) comprenant :
un corps tubulaire (18) ayant :
une première extrémité étant pourvue de moyens de connexion à une première pièce de plomberie ; et
une seconde extrémité pouvant être insérée ou reçue dans un alésage d'une seconde pièce de plomberie,
dans lequel le corps tubulaire (18) a un canal circonférentiel (24) et une pluralité d'évidements (26) débouchant dans le canal circonférentiel (24) et espacés à des intervalles réguliers autour du canal circonférentiel (24), le canal circonférentiel (24) et les évidements (26) étant capables d'interagir avec des moyens de retenue de sorte qu'une mise en prise entre les moyens de retenue et une pluralité d'évidements (26) oriente le raccord de connexion (10) en place dans l'une d'un certain nombre d'orientations prédéterminées.

2. Raccord de connexion (10) selon la revendication 1, dans lequel les moyens de connexion à la première pièce de plomberie au niveau de la première extrémité du corps tubulaire (18) sont orientés sur un angle par rapport à l'axe longitudinal du corps tubulaire (18).

3. Raccord de connexion (10) selon la revendication 1 ou 2, dans lequel les moyens de connexion à la première extrémité du corps tubulaire (18) sont une plaque annulaire qui peut venir en butée contre un collecteur de sortie ou d'entrée d'une pompe et qui peut y être fixée par un écrou interagissant avec le collecteur de sortie ou d'entrée.

4. Raccord de connexion (10) selon l'une quelconque des revendications 1 à 3, dans lequel une rainure circonférentielle (20) est prévue adjacente à une extrémité distale du corps tubulaire (18) pour recevoir un joint torique (19) afin d'assurer une étanchéité entre le raccord de connexion (10) et une surface interne (28) d'un alésage (40) d'une vanne (30).

5. Raccord de connexion (10) selon l'une quelconque des revendications 1 à 4, dans lequel un épaulement (46) est formé à l'intérieur d'un alésage (40) du corps tubulaire (18) du raccord de connexion (10).

6. Mécanisme de plomberie comprenant :
un raccord de connexion (10) tel que défini dans l'une quelconque des revendications 1 à 5 ;
la seconde pièce de plomberie ; et
les moyens de retenue.

7. Mécanisme de plomberie selon la revendication 6, dans lequel les moyens de sollicitation (42) s'opposent à une insertion du raccord de connexion (10) dans la seconde pièce de plomberie.

8. Mécanisme de plomberie selon la revendication 7, dans lequel les moyens de sollicitation (42) aident à renvoyer au moins l'un de la pluralité d'évidements (26) pour une mise en prise avec les moyens de retenue afin de verrouiller le raccord de connexion (10) en place.

9. Mécanisme de plomberie selon la revendication 7 ou 8, dans lequel les moyens de sollicitation comprennent un ressort de compression (42) retenu à l'intérieur de l'alésage de la seconde pièce de plomberie ; et dans lequel facultativement le ressort de compression (42) est mis en appui sur l'épaulement à l'intérieur de l'alésage (16) du corps tubulaire (10).

10. Mécanisme de plomberie selon l'une quelconque des revendications 6 à 9, dans lequel les moyens de retenue sont prévus sur la seconde pièce de plomberie et comprennent une pluralité de saillies.

11. Mécanisme de plomberie selon la revendication 10, dans lequel au moins certaines de la pluralité de saillies sont ajustables et sont formées par les tiges de vis (32, 48) s'étendant dans l'alésage de la seconde pièce de plomberie, et jusque dans le canal circonférentiel (24) et/ou des évidements (26) du corps tubulaire (10).

12. Mécanisme de plomberie selon la revendication 11, dans lequel les vis (32, 48) sont vissées vers l'intérieur ou l'extérieur pour augmenter ou diminuer l'interaction des tiges des vis (32, 48) avec le canal circonférentiel (24) et/ou des évidements (26), pour respectivement empêcher ou permettre le déplacement du raccord de connexion (10) par rapport à la pièce de plomberie.

13. Mécanisme de plomberie selon l'une quelconque des revendications 6 à 12, dans lequel la seconde pièce de plomberie est une vanne.

14. Mécanisme de plomberie selon l'une quelconque des revendications 6 à 13, comprenant en outre la première pièce de plomberie étant un tuyau, un tube ou un collecteur.
